# FASCICULE DE BREVET EUROPEEN

(11) **EP 4 446 220 B1**
(45) Date de publication et mention de la délivrance du brevet: **10.12.2025**
(21) Numéro de dépôt: 24168948.8
(22) Date de dépôt: 08.04.2024
(51) Int. Cl.: B64C 23/00, B64C 1/14

(54) **PARTIE D'AÉRONEF COMPRENANT UNE PORTE D'ACCÈS ET UNE PARTIE DE FUSELAGE FORMANT UNE CAVITÉ, CONFIGURÉE POUR RÉDUIRE DU BRUIT GÉNÉRÉ PAR LA CAVITÉ**
FLUGZEUGTEIL MIT EINER ZUGANGSTÜR UND EINEM HOHLRAUMBILDENDEN RUMPFTEIL, WELCHES AUSGESTALTET IST, DIE LÄRMRNTWICKLUNG IM HOHLRAUM ZU VERRINGERN
AIRCRAFT PART COMPRISING AN ACCESS DOOR AND A FUSELAGE PART FORMING A CAVITY, THE CAVITY BEING CONFIGURED TO REDUCE NOISE GENERATED THEREBY

(30) Priorité: 12.04.2023 FR 2303614
(43) Date de publication de la demande: 16.10.2024
(73) Titulaire: AIRBUS OPERATIONS (SAS), 31060 Toulouse (FR); AIRBUS Operations GmbH, 21129 Hamburg (DE)
(72) Inventeur: GRÜNE, Jan Sebastian, 21129 Hamburg (DE); NODE-LANGLOIS, Thomas, 31060 TOULOUSE (FR); GALDEANO, Stéphane, 31060 TOULOUSE (FR); ROMEO, Jean-Paul, 31060 TOULOUSE (FR); PONT, Grégoire, 31060 TOULOUSE (FR); CHAVET, François, 31060 TOULOUSE (FR)
(74) Mandataire: Gevers & Orès

(56) Documents cités:
- EP-A1- 1 142 784
- FR-A1- 3 053 023
- US-A- 5 018 683
- US-A- 5 340 054
- US-A1- 2012 267 475

## Description

### Domaine technique

La présente invention concerne une partie d'aéronef comprenant une porte d'accès et une partie de fuselage formant une cavité, ladite partie d'aéronef étant configurée pour réduire du bruit généré par la cavité.

### Etat de la technique

On sait qu'au niveau d'une porte d'accès permettant d'accéder à l'intérieur d'un aéronef, en particulier d'un avion de transport, une petite cavité est généralement créée quand la porte est fermée. Cette cavité non traversante, qui débouche à l'extérieur de l'aéronef, est formée entre le bord périphérique de la porte et la partie de fuselage formant l'encadrement de la porte, autour dudit bord périphérique de la porte.

Lors d'un vol de l'aéronef, la partie d'une telle cavité, située au bord amont de la porte, par rapport au sens d'écoulement de l'air le long du fuselage, peut générer du bruit. Ce bruit est dû à l'écoulement aérodynamique au-dessus de la cavité (fermée vers l'intérieur). Plus particulièrement, le bruit résulte du couplage entre la couche limite de l'écoulement aérodynamique et une recirculation correspondant à une partie d'écoulement aérodynamique qui pénètre dans la cavité et qui est renvoyée vers l'extérieur, en circulant d'aval vers l'amont.

Le bruit ainsi généré s'apparente à un sifflement qui peut être gênant pour les passagers et l'équipage de l'aéronef. On sait que, généralement, du bruit de ce type est principalement généré par la cavité formée au bord amont des portes d'accès situées à l'avant.

Il existe donc un besoin de trouver une solution permettant de réduire ce type de bruit.

L'état de la technique est illustré par le document FR 3053023 A1.

### Exposé de l'invention

Un objectif de la présente invention est d'apporter une telle solution. Pour ce faire, la présente invention concerne une partie d'aéronef comprenant une porte d'accès et une partie de fuselage comportant au moins un encadrement de porte situé en amont de ladite porte, ladite partie d'aéronef étant pourvue d'une cavité formée entre, d'une part, un bord amont de ladite porte en position fermée, et d'autre part, un bord aval de ladite partie de fuselage, situé en regard dudit bord amont de la porte, amont et aval étant définis par rapport au sens d'écoulement d'air à l'extérieur de ladite partie d'aéronef, ladite cavité débouchant à l'extérieur de la partie d'aéronef et comprenant un fond lié audit bord amont de la porte et audit bord aval de la partie de fuselage, ladite porte étant munie vers l'extérieur d'une plaque pourvue d'une face externe.

Selon l'invention, la face externe de la plaque de la porte comprend, au bord amont de la porte, un chanfrein.

Avantageusement, le chanfrein comprend une face oblique formant un angle compris entre 15° et 50° par rapport à une direction générale de la face externe de la plaque, préférentiellement entre 20° et 30°.

Ce chanfrein permet de diriger à l'extérieur de la cavité, au moins une partie importante de l'écoulement aérodynamique circulant le long de la face externe du fuselage de l'aéronef, lors d'un vol, et ainsi éviter la recirculation d'air génératrice de bruit. De plus, le fait de réaliser le chanfrein, réduit l'épaisseur du bord amont de la plaque susceptible d'être soumis à une partie de l'écoulement aérodynamique, ce qui réduit ou supprime la présence d'une paroi ou obstacle (égale à l'épaisseur de la plaque) dont le contact par l'écoulement aérodynamique aurait créé un impact, participant à la génération de bruit.

Ainsi, grâce aux caractéristiques précitées et aux effets techniques générés, le chanfrein permet de réduire le bruit, au moins pour les fréquences principales de bruit, qui sont gênantes pour les passagers et l'équipage de l'aéronef. Ceci permet, notamment, d'augmenter le confort des passagers et de l'équipage de l'aéronef.

Dans le cadre de la présente invention, la partie d'aéronef peut comporter tout type de porte d'accès existant sur un aéronef et présentant une cavité. On considère qu'une porte d'accès est une porte permettant d'accéder de l'extérieur de l'aéronef à une partie interne de l'aéronef. Il peut bien entendu s'agir d'une porte permettant à des personnes d'accéder à l'intérieur de la cabine de l'aéronef. Il peut également s'agir d'autres portes permettant d'accéder de l'extérieur à une partie de l'aéronef, telles qu'une porte cargo ou une porte d'accès à un ou des équipements, comme par exemple une porte d'accès à un radar de l'aéronef.

En outre, ce chanfrein peut être réalisé de façon simple et à coût réduit.

Dans un mode de réalisation préféré, une arête formée à la jonction, d'une part, du bord aval de la partie de fuselage, et d'autre part, d'une face externe de la partie de fuselage, est une arête aiguë.

Dans une première réalisation, l'arête aiguë correspond, en coupe transversale, à un point de jonction de deux segments de droite, et dans une seconde réalisation, l'arête aiguë correspond, en coupe transversale, à un arc de cercle de rayon inférieur à 1 millimètre, de préférence de l'ordre de 0,5 millimètre.

Cette arête aiguë permet de réduire l'angle d'un cône d'écoulement (aérodynamique), généré au niveau de l'arête par l'écoulement aérodynamique, par rapport à celui généré par une arête présentant un arc de cercle de rayon important. Cette arête aiguë permet de stabiliser le point de séparation de flux sur le bord de partie de fuselage et ainsi limiter les fluctuations de la couche limite, ce qui entraîne une réduction du bruit.

Cette arête aiguë est particulièrement avantageuse en combinaison avec le chanfrein. En effet, le fait de réduire l'angle du cône d'écoulement permet de diriger l'essentiel ou tout au moins une partie importante de l'écoulement aérodynamique situé dans le cône d'écoulement, sur la face externe oblique du chanfrein. Cet écoulement aérodynamique est ainsi renvoyé à l'extérieur de la cavité, par la face externe oblique du chanfrein, ce qui permet de réduire davantage encore le bruit (généré par recirculation dans la cavité).

Dans un mode de réalisation particulier, la partie d'aéronef comporte également une pièce rapportée agencée à l'intérieur de la cavité, en contact à la fois avec le bord aval de la partie de fuselage et le fond de la cavité.

Avantageusement, la pièce rapportée présente une forme triangulaire. De plus, de façon avantageuse, la pièce rapportée est collée à l'intérieur de la cavité.

La présente invention concerne également un aéronef, en particulier un avion de transport, qui comporte au moins une partie d'aéronef, telle que celle décrite ci-dessus. Dans un mode de réalisation particulier, l'aéronef peut comporter plusieurs parties d'aéronef de ce type configurées pour réduire le bruit, et à savoir une partie d'aéronef à chaque porte d'accès générant un bruit gênant du type précité.

### Brève description des figures

Les figures annexées feront bien comprendre comment l'invention peut être réalisée. Sur ces figures, des références identiques désignent des éléments semblables.
La figure 1 est une vue partielle, en perspective, de l'avant d'un aéronef montrant une partie d'aéronef, à laquelle peut être appliquée la présente invention.
La figure 2 est une vue partielle et en perspective d'une cavité formée entre une partie de fuselage et un bord amont d'une porte d'accès de l'aéronef.
La figure 3 est une vue en coupe transversale montrant la cavité de la figure 2 pourvue d'éléments de réduction de bruit.
La figure 4 est une vue schématique d'une cavité permettant d'expliquer une génération de bruit.
La figure 5 est une vue agrandie, montrant une partie de la vue en coupe de la figure 3, permettant notamment d'expliquer l'action combinée d'un chanfrein et d'une arête aiguë dans la réduction du bruit.

### Description détaillée

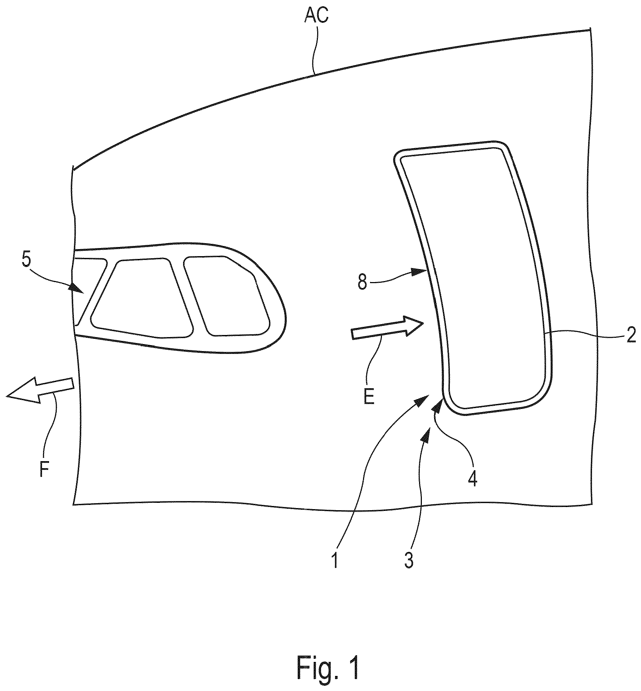

La partie d'aéronef 1, représentée schématiquement sur la figure 1 et permettant d'illustrer l'invention, est une partie externe d'un aéronef AC, en particulier d'un avion de transport. Cette partie d'aéronef 1 comprend, notamment, une porte 2 d'accès usuelle, c'est-à-dire une porte permettant d'accéder à l'intérieur de l'aéronef AC, ainsi qu'une partie de fuselage 3 comportant au moins un encadrement de porte 4 (situé au moins en amont de ladite porte 2).

Dans le cadre de la présente invention, la porte d'accès peut correspondre à tout type de porte d'accès permettant d'accéder de l'extérieur de l'aéronef à une partie interne (cabine, soute, ...) de l'aéronef et qui présente une cavité telle que précisée ci-dessous.

Sur l'exemple de la figure 1 montrant partiellement l'avant de l'aéronef AC, par exemple un avion de transport monocouloir, et montrant notamment une partie du poste de pilotage 5, la partie d'aéronef 1 est située au niveau d'une porte 2 avant gauche. L'invention s'applique bien évidemment à tout type d'avion de transport.

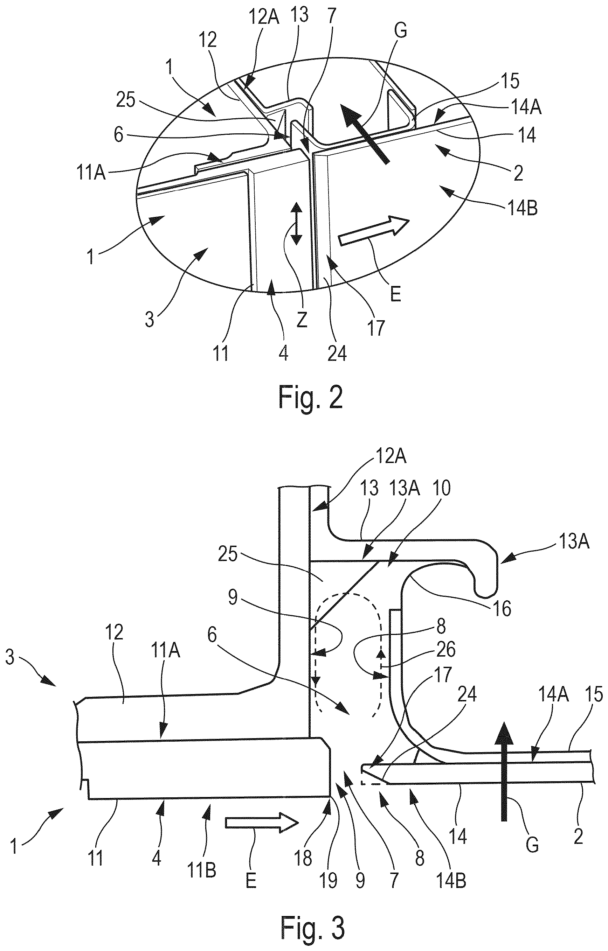

Dans le cadre de la présente invention :
- les termes « amont » et « aval » sont définis par rapport au sens de l'écoulement d'air à l'extérieur de la partie d'aéronef 1, comme illustré par une flèche E sur la figure 1, lorsque l'aéronef AC se déplace en vol dans le sens illustré par une flèche F sur la figure 1 ; et
- les termes « extérieur » et « externe » d'une part, et « intérieur » et « interne » d'autre part, sont définis respectivement par rapport à l'extérieur et à l'intérieur de l'aéronef AC ou de la partie d'aéronef 1, comme illustré par une flèche G sur les figures 2 et 3, qui est dirigée vers l'intérieur. L'intérieur (ou interne) est donc situé dans le sens de la flèche G, et l'extérieur (ou externe) est situé en sens opposé à celui de la flèche G.

La partie d'aéronef 1 est pourvue d'une cavité 6 allongée (verticalement dans la direction montrée par une double flèche Z sur la figure 2) qui apparaît quand la porte 2 est fermée.

Cette cavité 6 débouche à l'extérieur de l'aéronef AC, par l'intermédiaire d'une ouverture 7 (ou embouchure), comme montré sur les figures 2 et 3. La cavité 6 n'est pas traversante, c'est-à-dire qu'elle ne permet pas un accès de l'extérieur de l'aéronef AC à l'intérieur de l'aéronef AC. La cavité 6 est fermée avec, comme seule ouverture, l'ouverture 7.

Bien que des cavités de ce type soient formées tout autour de la porte 2 lorsqu'elle est fermée, entre le bord périphérique de la porte 2 (c'est-à-dire le bord qui entoure la porte 2) et la partie de fuselage 3 formant l'encadrement 4 de la porte, la cavité 6 considérée dans la description ci-dessous est située sur le bord amont 8 de la porte 2. Le bord amont 8 de la porte 2 correspond au bord vertical à l'amont de la porte 2 (figure 1).

Plus précisément, la cavité 6 (figure 3) est formée entre :
- d'une part, ledit bord amont 8 de la porte 2 en position fermée ; et
- d'autre part, un bord aval 9 de la partie de fuselage 3, ce bord aval 9 étant situé en regard dudit bord amont 8 de la porte 2.

La cavité 6 (non traversante) comprend également un fond 10 lié audit bord amont 8 de la porte 2 et audit bord aval 9 de la partie de fuselage 3.

Le fond 10 se présente sous la forme d'une portion reliant le bord amont 8 de la porte 2 au bord aval 9 de la partie du fuselage 3. Il peut se présenter sous la forme d'un élément plan, comme décrit sur la figure 3. Il peut également se présenter sous la forme d'un élément courbe, voire d'un point de jonction entre le bord amont 8 et le bord aval 9.

Dans le mode de réalisation particulier des figures 2 et 3, le bord aval 9 de la partie de fuselage 3 comprend un ensemble de pièces usuelles, notamment métalliques, qui sont fixées ensemble, et en particulier :
- une plaque externe 11 située vers l'extérieur de l'aéronef AC et correspondant par exemple à l'encadrement 4 de la porte 2 ;
- une plaque 12, en forme d'équerre, fixée sur la face interne 11A de la plaque externe 11 ; et
- une pièce 13 (en forme d'équerre avec une extrémité libre 13A pourvue d'un coude) fixée sur une face aval 12A de la plaque 12.

La plaque externe 11 correspond à la peau du fuselage. Cette plaque 11 et la plaque 12 peuvent se présenter sous la forme d'un élément en un seul bloc ou de deux parties liées ensemble par tout moyen connu de l'homme du métier, comme décrit dans le reste de la description.

De plus, la porte 2 comprend notamment :
- une plaque externe 14 située vers l'extérieur de l'aéronef AC ; et
- une plaque 15 de forme générale en U (figure 2) qui est fixée sur la face interne 14A de la plaque externe 14.

La plaque externe 14 se rapporte à la face externe de la porte 2, appelée communément peau. Cette plaque pourrait aussi se présenter sous la forme d'un élément rapporté.

La partie d'aéronef 1 comprend, en outre, comme représenté sur la figure 3, un joint 16 qui fixé à l'extrémité interne de la plaque 15 de la porte 2 et est en contact avec la plaque 13 de la partie de fuselage 3, dans la position fermée de la porte 2. Pour des raisons de clarté du dessin, le joint (bien que présent) n'est pas représenté sur la figure 2.

Lors d'un vol de l'aéronef AC, cette cavité 6 (formée par les éléments 11 à 16), qui est située en amont de la porte 2, par rapport au sens E d'écoulement de l'air le long du fuselage lors du vol, peut générer du bruit.

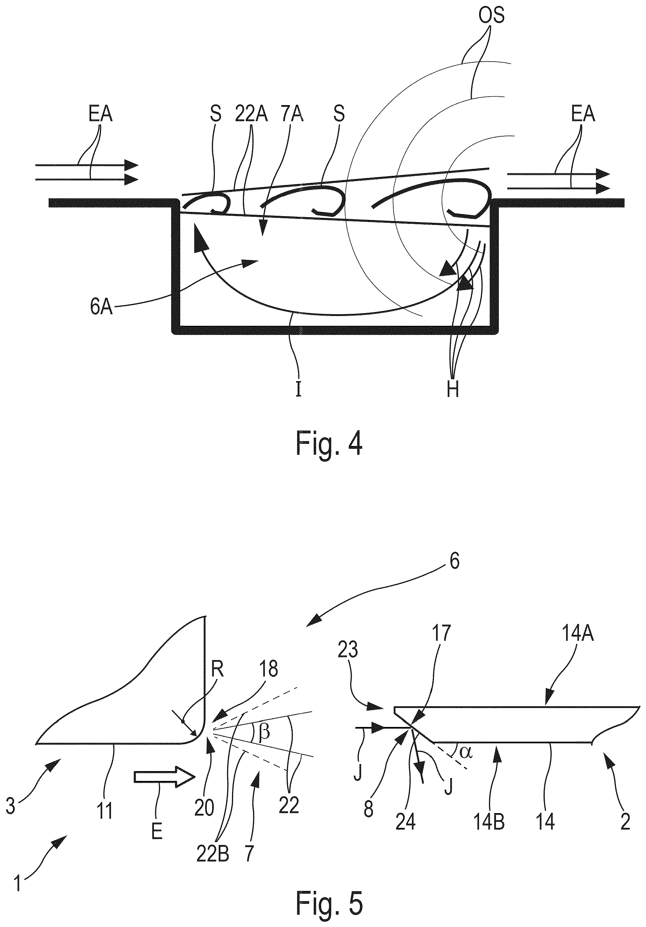

La figure 4 illustre schématiquement une cavité 6A (non traversante) débouchant, par une ouverture 7A, vers l'extérieur où est généré un écoulement aérodynamique EA. La figure 4 est une figure schématique destinée à expliquer les principaux phénomènes apparaissant au niveau d'une cavité 6A située à l'extérieur du fuselage d'un aéronef pendant un vol et participant à la génération de bruit. Bien que cette cavité 6A soit différente de la cavité 6 des figures 2 et 3 et qu'elle soit représentée de façon schématique, les références relatives à la cavité 6 ont été reprises sur la figure 4 en y ajoutant la lettre A (pour faire le lien avec la cavité 6). Le flux ou l'écoulement aérodynamique EA génère au bord amont de la cavité 6A un cône d'écoulement 22A, dont une partie arrive au contact du bord aval de la cavité 6A et est dirigé dans la cavité 6A comme illustré par des flèches H. Ceci génère une recirculation de l'écoulement comme illustré par une flèche **I,** qui ressort au bord amont et agit sur l'écoulement EA de manière à créer des perturbations (illustrées par des symboles S) dans le cône d'écoulement 22A, ce qui génère du bruit, représenté schématiquement par des ondes sonores OS sur cette figure 4.

Par conséquent, sur la base de l'explication précédente, lors d'un vol de l'aéronef AC, l'écoulement aérodynamique E (figures 1 à 3) au-dessus de la cavité 6 (fermée) génère du bruit. Ce bruit qui est notamment dû au couplage entre l'écoulement aérodynamique E et le courant retour (après une recirculation) dans la cavité 6, s'apparente à un sifflement, que l'on entend à l'intérieur de l'aéronef AC, et qui peut être gênant pour les passagers et l'équipage de l'aéronef AC.

Généralement, le bruit généré comprend notamment des sifflements de fréquences sonores, particulièrement gênantes, qui sont situées dans deux domaines de fréquences, à savoir un premier domaine de fréquences entre 5 kHz et 6,5 kHz et un second domaine de fréquences entre 8,5 kHz et 10 kHz.

Pour réduire ce bruit, la face externe 14B de la plaque externe 14 de la porte 2 comprend, au bord amont 8 de la porte 2, un chanfrein 17, c'est-à-dire que son extrémité amont 23 (figure 5) présente une coupe en biseau sur la face externe 14B.

Dans un mode de réalisation particulier, représenté sur la figure 5, le chanfrein 17 comprend une face externe 24 oblique, qui forme un angle α par rapport à la direction générale de la face externe 14B de la plaque externe 14. Cet angle α est compris entre 15° et 50°, et de préférence entre 20° et 30°.

Ce chanfrein 17 permet de diriger à l'extérieur de la cavité 6, au moins une partie importante de l'écoulement aérodynamique E circulant le long de la face externe du fuselage de l'aéronef, lors d'un vol, et ainsi d'éviter une recirculation d'air génératrice de bruit.

De plus, le fait de créer le chanfrein 17, réduit (ou supprime) l'épaisseur de l'extrémité amont 23 de la plaque externe 14 (susceptible d'être soumise à une partie de l'écoulement aérodynamique), ce qui supprime la présence d'une paroi ou d'un obstacle (de taille égale à l'épaisseur de la plaque 14 à l'extrémité amont 23) dont le contact par l'écoulement aérodynamique aurait créé un impact, participant à la génération de bruit.

Grâce à ces caractéristiques techniques et aux effets techniques qu'elles génèrent, le chanfrein 17 permet de réduire le bruit lié à la cavité 6, et tout au moins les fréquences principales de bruit (et notamment de sifflement), qui sont gênantes pour les passagers et l'équipage de l'aéronef.

En outre, ce chanfrein 17, par exemple formé par une découpe en biseau de la plaque externe 14 à l'extrémité amont 23, peut être réalisé de façon simple et à coût réduit.

Par ailleurs, dans un mode de réalisation préféré, une arête 18 aval formée sur la plaque externe 11 présente une forme particulière, à savoir une forme aiguë précisée ci-dessous, qui permet de participer à la réduction du bruit.

Comme représenté sur la figure 3, l'arête 18 est située à la jonction, d'une part, du bord aval 9 de la plaque externe 11 de la partie de fuselage 3, et d'autre part, de la face externe 11B de la plaque externe 11 de la partie de fuselage 3. Cette arête 18 est aiguë, comme montré sur les figures 3 et 5.

Dans un premier mode de réalisation, représenté sur la figure 3, l'arête 18 aiguë présente, en coupe transversale, un point de jonction 19 de deux segments de droite (correspondant respectivement au bord aval 9 et à la face externe 11B de la plaque externe 11). Dans ce premier mode de réalisation, l'arête 18 aiguë se termine en pointe.

En outre, dans un second mode de réalisation représenté sur la figure 5, l'arête 18 présente, en coupe transversale, un arc de cercle 20 de rayon R réduit, inférieur à 1 millimètre, de préférence de l'ordre de 0,5 millimètre. Un tel arc de cercle 20 permet de contrôler le point de détachement et ainsi notamment de diriger l'écoulement sur la face externe 24 oblique du chanfrein 17.

Cette arête 18 aiguë (conforme au premier mode de réalisation ou au second mode de réalisation) permet de réduire l'angle ß d'un cône d'écoulement 22 (aérodynamique), généré au niveau de l'arête 18 par l'écoulement aérodynamique E, comme montré sur la figure 5, par rapport au cône 22B (illustré par des tirets) qu'aurait généré une arête présentant un arc de cercle de rayon important (et plus élevé que le rayon R). Cette arête 18 aiguë permet de stabiliser le point de séparation de flux sur le bord de la plaque 11 (de la partie de fuselage 3) et ainsi limiter les fluctuations de la couche limite, ce qui entraîne une réduction de bruit.

Cette arête 18 aiguë est particulièrement avantageuse en combinaison avec le chanfrein 17, comme dans les modes de réalisation des figures 3 et 5. En effet, le fait de réduire l'angle ß du cône d'écoulement 22 permet de diriger l'essentiel (ou tout au moins une partie importante) de l'écoulement aérodynamique situé dans le cône d'écoulement 22 sur la face externe 24 oblique du chanfrein 17. Cet écoulement aérodynamique est ainsi renvoyé à l'extérieur de la cavité 6, par la face externe 24 oblique du chanfrein 17, comme illustré par de flèches J sur la figure 5, ce qui permet de réduire davantage encore le bruit (généré par une recirculation dans la cavité).

En outre, l'arête 18 aiguë peut être réalisée de façon simple et à coût réduit.

Dans un mode de réalisation particulier, représenté sur les figures 2 et 3, la partie d'aéronef 1 comporte également une pièce rapportée 25 agencée à l'intérieur de la cavité 6. Cette pièce rapportée 25 est en contact, d'une part, avec le bord aval 12A de la plaque 12 de la partie de fuselage 3, et d'autre part avec la face externe 13A de la plaque 13 de la partie de fuselage 3, c'est-à-dire avec le fond 10 de la cavité 6. De préférence, la pièce rapportée 25 présente une forme générale qui est sensiblement triangulaire.

Dans un mode de réalisation particulier, la pièce rapportée 25, réalisée par exemple en polymère, est collée à l'intérieur de la cavité 6, à la fois sur le bord aval 12A de la plaque 12 et sur le fond 10 de la cavité 6. Cette pièce rapportée 25 doit être rigide de manière à ce que sa structure soit comparable à celle des bords amont 8 et aval 9.

Cette pièce rapportée 25 permet de modifier la voie de circulation principale de l'écoulement dans la cavité 6. Ainsi, grâce à la présence de cette pièce rapportée 25, la voie usuelle de la circulation (illustrée schématiquement par un tracé 26 en traits interrompus sur la figure 3) ne peut pas être suivie par l'écoulement. La pièce rapportée 25 réduit, par conséquent, la rétroaction de cette circulation sur l'écoulement aérodynamique à l'embouchure (ouverture 7) de la cavité 6. Ceci a pour effet de réduire le niveau sonore.

Les caractéristiques et éléments particuliers précités (chanfrein 17, arête 18 aiguë, pièce rapportée 25) de la partie d'aéronef 1, qu'ils soient pris individuellement ou en combinaison, permettent de réduire fortement le bruit (notamment un sifflement audible et désagréable) susceptible d'être généré par la cavité 6. Elles permettent notamment de réduire les fréquences sonores, particulièrement gênantes, qui sont créées dans les deux domaines de fréquences précités, à savoir entre 5 kHz et 6,5 kHz et entre 8,5 kHz et 10 kHz. Ceci permet, notamment, d'augmenter le confort de vol pour les passagers et l'équipage de l'aéronef.

La partie d'aéronef 1 pourvue de ces éléments de réduction de bruit, qui a été décrite ci-dessus en lien avec une porte 2 avant d'un aéronef, au niveau de laquelle les bruits gênants sont généralement les plus importants, peut être appliquée à chaque porte d'accès de l'aéronef au niveau de laquelle est généré un tel bruit. Ainsi, dans un mode de réalisation particulier, l'aéronef peut comporter plusieurs parties d'aéronef 1 de ce type, configurées pour réduire le bruit, et plus précisément une partie d'aéronef 1 à chaque porte d'accès où une cavité génère un tel bruit, gênant pour les passages et/ou l'équipage de l'aéronef.

## Revendications

1. Partie d'aéronef (1) comprenant une porte d'accès (2) et une partie de fuselage (3) comportant au moins un encadrement (4) de porte situé en amont de ladite porte (2), ladite partie d'aéronef (1) étant pourvue d'une cavité (6) formée entre, d'une part, un bord amont (8) de ladite porte (2) en position fermée, et d'autre part, un bord aval (9) de ladite partie de fuselage (3), situé en regard dudit bord amont (8) de la porte (2), amont et aval étant définis par rapport au sens (E) d'écoulement d'air à l'extérieur de ladite partie d'aéronef (1), ladite cavité (6) débouchant à l'extérieur de la partie d'aéronef (1) et comprenant un fond (10) lié audit bord amont (8) de la porte (2) et audit bord aval (9) de la partie de fuselage (3), ladite porte (2) étant munie vers l'extérieur d'une plaque (14) pourvue d'une face externe (14B),
**caractérisée en ce que** la face externe (14B) de la plaque (14) de la porte (2) comprend, au bord amont (8) de la porte (2), un chanfrein (17).

2. Partie d'aéronef (1) selon la revendication 1,
**caractérisée en ce que** le chanfrein (17) comprend une face (24) oblique, formant un angle (α) compris entre 15° et 50° par rapport à une direction générale de la face externe (14B) de la plaque (14).

3. Partie d'aéronef (1) selon l'une des revendications 1 et 2,
**caractérisée en ce qu'**une arête (18) formée à la jonction, d'une part, du bord aval (9) de la partie de fuselage (3), et d'autre part, d'une face externe (11B) de la partie de fuselage (3), est une arête (18) aiguë.

4. Partie d'aéronef (1) selon la revendication 3,
**caractérisée en ce que** l'arête (18) aiguë correspond, en coupe transversale, à un point de jonction (19) de deux segments de droite.

5. Partie d'aéronef (1) selon la revendication 3,
**caractérisée en ce que** l'arête (18) aiguë correspond, en coupe transversale, à un arc de cercle (20) de rayon (R) Inférieur à 1 millimètre.

6. Partie d'aéronef (1) selon l'une quelconque des revendications précédentes,
**caractérisée en ce qu'**elle comporte une pièce rapportée (25) agencée à l'intérieur de la cavité (6), en contact à la fois avec le bord aval (9) de la partie de fuselage (3) et le fond (10) de la cavité (6).

7. Partie d'aéronef (1) selon la revendication 6,
**caractérisée en ce que** la pièce rapportée (25) présente une forme triangulaire.

8. Partie d'aéronef (1) selon l'une des revendications 5 et 6,
**caractérisée en ce que** la pièce rapportée (25) est collée à l'intérieur de la cavité (6).

9. Aéronef,
**caractérisé en ce qu'**il comporte au moins une partie d'aéronef (1) selon l'une quelconque des revendications 1 à 8.

## Patentansprüche

1. Flugzeugteil (1), umfassend eine Zugangstür (2) und ein Rumpfteil (3), das mindestens eine Türfassung (4) umfasst, die stromaufwärts der Tür (2) gelegen ist, wobei das Flugzeugteil (1) mit einem Hohlraum (6) ausgestattet ist, der zwischen einerseits einer stromaufwärtigen Seite (8) der Tür (2) in der geschlossenen Position und andererseits einer stromabwärtigen Seite (9) des Rumpfteils (3), der stromaufwärtigen Seite (8) der Tür (2) zugewandt, gelegen ist, wobei stromaufwärts und stromabwärts in Bezug auf die Luftströmungsrichtung (E) auf der Außenseite des Flugzeugteils (1) definiert sind, wobei der Hohlraum (6) zur Außenseite des Flugzeugteils (1) führt und einen Boden (10) umfasst, der mit der stromaufwärtigen Seite (8) der Tür (2) und der stromabwärtigen Seite (9) des Rumpfteils (3) verbunden ist, wobei die Tür (2) zur Außenseite mit einer Platte (14) versehen ist, die mit einer Außenfläche (14B) ausgestattet ist,
**dadurch gekennzeichnet, dass** die Außenfläche (14B) der Platte (14) der Tür (2) auf der stromaufwärtigen Seite (8) der Tür (2) eine Abschrägung (17) umfasst.

2. Flugzeugteil (1) nach Anspruch 1,
**dadurch gekennzeichnet, dass** die Abschrägung (17) eine schrägliegende Fläche (24) umfasst, die einen Winkel (α) zwischen 15° und 50° in Bezug auf eine allgemeine Richtung der Außenfläche (14B) der Platte (14) bildet.

3. Flugzeugteil (1) nach einem der Ansprüche 1 und 2,
**dadurch gekennzeichnet, dass** eine an der Verbindungsstelle einerseits der stromabwärtigen Seite (9) des Rumpfteils (3) und andererseits einer Außenfläche (11B) des Rumpfteils (3) gebildete Kante (18) eine spitze Kante (18) ist.

4. Flugzeugteil (1) nach Anspruch 3,
**dadurch gekennzeichnet, dass** die spitze Kante (18) im Querschnitt einem Verbindungspunkt (19) von zwei geraden Strecken entspricht.

5. Flugzeugteil (1) nach Anspruch 3,
**dadurch gekennzeichnet, dass** die spitze Kante (18) im Querschnitt einem Bogen eines Kreises (20) mit einem Durchmesser (R) kleiner als 1 Millimeter entspricht.

6. Flugzeugteil (1) nach einem der vorstehenden Ansprüche,
**dadurch gekennzeichnet, dass** es ein angestücktes Werkstück (25) umfasst, das im Inneren des Hohlraums (6) in Kontakt mit sowohl der stromabwärtigen Seite (9) des Rumpfteils (3) als auch dem Boden (10) des Hohlraums (6) eingerichtet ist.

7. Flugzeugteil (1) nach Anspruch 6,
**dadurch gekennzeichnet, dass** das angestückte Werkstück (25) eine dreieckige Form aufweist.

8. Flugzeugteil (1) nach einem der Ansprüche 5 und 6,
**dadurch gekennzeichnet, dass** das angestückte Werkstück (25) im Inneren des Hohlraums (6) angeklebt ist.

9. Flugzeug,
**dadurch gekennzeichnet, dass** es mindestens ein Flugzeugteil (1) nach einem der Ansprüche 1 bis 8 umfasst.

## Claims

1. An aircraft part (1) comprising an access door (2) and a fuselage part (3) comprising at least one door frame (4) located upstream of said door (2), said aircraft part (1) being provided with a cavity (6) formed between, on one side, an upstream edge (8) of said door (2) in the closed position and, on the other side, a downstream edge (9) of said fuselage part (3), which is located facing said upstream edge (8) of the door (2), upstream and downstream being defined with respect to the direction (E) of airflow outside said aircraft part (1), said cavity (6) opening to the outside of the aircraft part (1) and comprising a bottom (10) connected to said upstream edge (8) of the door (2) and to said downstream edge (9) of the fuselage part (3), said door (2) being equipped toward the outside with a plate (14) provided with an outer face (14B),
**characterized in that** the outer face (14B) of the plate (14) of the door (2) comprises, at the upstream edge (8) of the door (2), a chamfer (17).

2. The aircraft part (1) as claimed in claim 1,
**characterized in that** the chamfer (17) comprises an oblique face (24), which forms an angle (α) between 15° and 50° with respect to a general direction of the outer face (14B) of the plate (14).

3. The aircraft part (1) as claimed in either of claims 1 and 2,
**characterized in that** a ridge (18), which is formed at the join between, on one side, the downstream edge (9) of the fuselage part (3) and, on the other side, an outer face (11B) of the fuselage part (3), is a sharp ridge (18).

4. The aircraft part (1) as claimed in claim 3,
**characterized in that** the sharp ridge (18) corresponds, in terms of cross section, to a joining point (19) of two straight-line segments.

5. The aircraft part (1) as claimed in claim 3,
**characterized in that** the sharp ridge (18) corresponds, in terms of cross section, to an arc of a circle (20) with a radius (R) smaller than 1 millimeter.

6. The aircraft part (1) as claimed in any one of the preceding claims, **characterized in that** it comprises an add-on component (25) arranged inside the cavity (6), in contact with both the downstream edge (9) of the fuselage part (3) and the bottom (10) of the cavity (6).

7. The aircraft part (1) as claimed in claim 6,
**characterized in that** the add-on component (25) has a triangular form.

8. The aircraft part (1) as claimed in either of claims 5 and 6,
**characterized in that** the add-on component (25) is adhesively bonded inside the cavity (6).

9. An aircraft,
**characterized in that** it comprises at least one aircraft part (1) as claimed in any one of claims 1 to 8.
